# EUROPEAN PATENT APPLICATION

(11) **EP 4 613 455 A1**
(43) Date of publication of application: **10.09.2025**
(21) Application number: 23885785.8
(22) Date of filing: 31.10.2023
(51) Int. Cl.: B29C 44/00, B29C 45/26, B29C 45/56

(54) **MOLD AND MOLDED RESIN ARTICLE**

(30) Priority: 31.10.2022 JP 2022174979
(71) Applicant: Resonac Corporation, Tokyo 105-7325 (JP)
(72) Inventor: YAMADA, Koji, Tagawa-shi, Fukuoka 825-0005 (JP); MITSUISHI, Naoko, Tagawa-shi, Fukuoka 825-0005 (JP); ANDO, Hiroyuki, Tagawa-shi, Fukuoka 825-0005 (JP); MORISHITA, Seigo, Tagawa-shi, Fukuoka 825-0005 (JP); SONO, Takashi, Tagawa-shi, Fukuoka 825-0005 (JP)
(74) Representative: Hoffmann Eitle
(86) International application number: PCT/JP2023/039351
(87) International publication number: WO 2024/096031

(57) **Abstract**

Provided is a metal mold including: a fixed mold; a movable mold that is movable in an opening/closing direction with respect to the fixed mold, that forms, between itself and the fixed mold, a first cavity extending in a direction intersecting the opening/closing direction, and a second cavity extending from an end of the first cavity in the intersecting direction to an opening direction with respect to the fixed mold, and that expands volumes of the first cavity and the second cavity when moved in the opening direction; and a slide mold that is movable relatively with respect to the fixed mold, that forms an end portion of the second cavity in the opening direction, and that maintains its position relative to the fixed mold with respect to a volume expansion operation of the first cavity and the second cavity by the movable mold.

## Description

### Technical Field

The present disclosure relates to a metal mold and a resin molded article.

### Background Art

Japanese Patent Application Laid-Open (JP-A) No. 2019-181874 discloses a molding mold including: a metal mold main body configured to include a first metal mold for molding a surface other than a fastening surface in one plate surface; and a second metal mold for molding the other plate surface of a foamed resin molded article, and configured to form a cavity between the first metal mold and the second metal mold and to be capable of expanding a volume of the cavity by separating the first metal mold and the second metal mold from each other; and an insert for molding a corner portion, the insert being assembled to the metal mold main body such that a portion for molding the fastening surface and a portion for molding an end surface are exposed to the cavity, in which the portion for molding the corner portion is made of a metal having a higher thermal conductivity than the metal mold main body.

### SUMMARY OF INVENTION

### Technical Problem

In the configuration described in JP-A No. 2019-181874, when the foamed resin molded article has a main body portion and a flange portion, deformation may occur in a design surface from the main body portion to the flange portion of the foamed resin molded article during a core back operation (operation of expanding a volume of a cavity) of separating the first metal mold and the second metal mold from each other. This may deteriorate an appearance of the resin molded article.

An object of the present disclosure is to provide a technique capable of suppressing deformation from occurring on a design surface of a resin molded article due to a cavity volume expansion operation during molding of the resin molded article.

### Solution to Problem

Means for solving the above problems include the following embodiments.
<1> A metal mold including:
   a fixed mold;
   a movable mold that is movable in an opening/closing direction with respect to the fixed mold, that forms, between itself and the fixed mold, a first cavity extending in a direction intersecting the opening/closing direction, and a second cavity extending from an end of the first cavity in the intersecting direction to an opening direction with respect to the fixed mold, and that expands volumes of the first cavity and the second cavity when moved in the opening direction; and
   a slide mold that is movable relatively with respect to the fixed mold, that forms an end portion of the second cavity in the opening direction, and that maintains its position relative to the fixed mold with respect to a volume expansion operation of the first cavity and the second cavity by the movable mold.
<2> The metal mold according to <1>, in which the slide mold maintains its position relative to the fixed mold by being pressed against the fixed mold with respect to the volume expansion operation of the first cavity and the second cavity by the movable mold.
<3> The metal mold according to <2>, in which the slide mold is pressed against the fixed mold by a biasing member provided at the movable mold.
<4> The metal mold according to any one of <1> to <3>, in which the slide mold has a gate for injecting a resin from the end portion of the second cavity in the opening direction into the second cavity, and is movable toward an outer side in the intersecting direction with respect to the fixed mold.
<5> A resin molded article formed using the metal mold according to any one of <1> to <4>.

### Advantageous Effects of Invention

According to the present disclosure, it is possible to provide a technique capable of suppressing deformation from occurring on a design surface of a resin molded article due to a cavity volume expansion operation during molding of the resin molded article.

### BRIEF DESCRIPTION OF DRAWINGS

Fig. 1 is a cross-sectional view illustrating a part of a foamed resin molded article according to a first embodiment of the present disclosure.
Fig. 2 is a cross-sectional view of a metal mold according to the first embodiment of the present disclosure.
Fig. 3 is a cross-sectional view illustrating a periphery of a gate portion of the metal mold illustrated in Fig. 2.
Fig. 4 is a cross-sectional view illustrating a state in which a resin is filled, in the metal mold illustrated in Fig. 2.
Fig. 5 is a cross-sectional view illustrating a state in which the periphery of the gate portion is filled with a resin, in the metal mold illustrated in Fig. 4.
Fig. 6 is a cross-sectional view illustrating a state in which a movable mold moves in an opening direction with respect to a fixed mold and a resin is foamed, in the metal mold illustrated in Fig. 4.
Fig. 7 is a cross-sectional view illustrating a state in which a resin in the periphery of the gate portion is foamed, in the metal mold illustrated in Fig. 6.
Fig. 8 is a cross-sectional view illustrating a state in which the movable mold is moved in the opening direction to take out a foamed resin molded article, in the metal mold illustrated in Fig. 6.
Fig. 9 is a cross-sectional view illustrating a state of the periphery of the gate portion, in the metal mold illustrated in Fig. 8.
Fig. 10 is a cross-sectional view illustrating a state in which a movable mold moves in an opening direction and a resin is foamed, in a metal mold of a comparative example.
Fig. 11 is a cross-sectional view illustrating a state in which a resin in the periphery of a gate portion is foamed, in the metal mold of the comparative example illustrated in Fig. 10.
Fig. 12 is a cross-sectional view illustrating a state in which a movable mold moves in an opening direction and a resin is foamed, in a periphery of a gate portion of a metal mold according to a second embodiment of the present disclosure.
Fig. 13 is a cross-sectional view illustrating a state in which the movable mold is moved in the opening direction to take out a foamed resin molded article, in the periphery of the gate portion of the metal mold illustrated in Fig. 12.
Fig. 14 is a view illustrating a state in which a foamed resin molded article molded using a metal mold according to a third embodiment of the present disclosure is visually recognized.
Fig. 15 is a cross-sectional view illustrating a state in which a projecting portion of the foamed resin molded article is molded so as to gradually decrease toward a distal end, in a periphery of a gate portion of the metal mold according to the third embodiment of the present disclosure.
Fig. 16 is a cross-sectional view illustrating a state in which a movable mold is moved in an opening direction to take out the foamed resin molded article, in the periphery of the gate portion of the metal mold illustrated in Fig. 15.
Fig. 17 is a view illustrating a state in which a foamed resin molded article molded using a metal mold according to a fourth embodiment of the present disclosure is visually recognized.
Fig. 18 is a cross-sectional view illustrating a state in which a gate of the foamed resin molded article is formed on an inner side in a width direction than a distal end of a projecting portion, in a periphery of a gate portion of the metal mold according to the fourth embodiment of the present disclosure.
Fig. 19 is a cross-sectional view illustrating a state in which a movable mold is moved in an opening direction to take out the foamed resin molded article, in the periphery of the gate portion of the metal mold illustrated in Fig. 18.
Fig. 20 is a cross-sectional view illustrating a state in which a foamed resin molded article molded using a metal mold according to a fifth embodiment of the present disclosure is visually recognized.
Fig. 21 is a cross-sectional view illustrating a state in which a gate of the foamed resin molded article is formed in a flat shape, in a periphery of a gate portion of the metal mold according to the fifth embodiment of the present disclosure.
Fig. 22 is a cross-sectional view illustrating a state in which a movable mold is moved in an opening direction to take out the foamed resin molded article, in the periphery of the gate portion of the metal mold illustrated in Fig. 21.

### DESCRIPTION OF EMBODIMENTS

Hereinafter, a mode for carrying out the present disclosure will be described in detail. However, the present disclosure is not limited to the following embodiments. In the following embodiments, the components are not essential unless otherwise specified. The same applies to numerical values and ranges thereof, and the present disclosure is not limited thereto.

An arrow X in each drawing indicates a width direction of a resin molded article 70, and an arrow Y indicates an opening/closing direction that intersects with the width direction of the resin molded article 70 and in which a movable mold 26 of a metal mold 10 opens and closes with respect to a fixed mold 20.

### [First Embodiment]

### [Resin Molded Article 70]

A resin molded article according to a first embodiment of the present disclosure includes: a main body portion having a first design surface; and a projecting portion projecting from a peripheral edge portion of the main body portion to a side opposite from the first design surface in a thickness direction of the main body portion and to an outer side of the main body portion, the projecting portion having a second design surface continuous with the first design surface, in which a gate mark is formed on a side opposite from the second design surface in a thickness direction of the projecting portion with respect to a distal end in a projecting direction at a distal end portion of the projecting portion. Hereinafter, specific examples of the resin molded article will be described with reference to the drawings, but the present disclosure is not limited thereto.

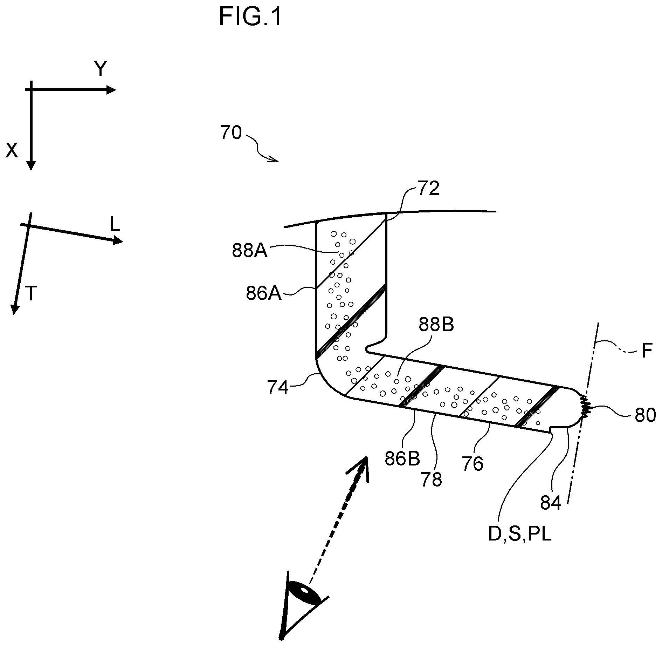

As illustrated in Fig. 1, the resin molded article 70 of the present embodiment is a foamed resin molded article using a foamed resin. The resin molded article 70 includes a main body portion 72, a projecting portion 76, and a gate mark 80.

### (Main Body Portion 72)

The main body portion 72 is a portion having a flat plate shape extending in an X direction. The main body portion 72 extends in the X direction, and the projecting portion 76 projecting outward in the X direction is formed at a peripheral edge portion 74 at an end in the X direction (lower side in the drawing in Fig. 1).

### (Projecting Portion 76)

The projecting portion 76 extends in a projecting direction which is a direction in which the projecting portion projects from the peripheral edge portion 74. The projecting portion 76 includes a general portion 78 and a distal end portion 84. Note that the distal end portion 84 is a distal end portion of the projecting portion 76 in the projecting direction. The general portion 78 is a portion from the distal end portion 84 of the projecting portion 76 to the main body portion 72. A thickness of the general portion 78 may be constant or may be increased or decreased in the projecting direction.

The projecting direction of the projecting portion 76 is indicated by an arrow L in the drawing. A thickness direction of the projecting portion 76, which is a direction orthogonal to the projecting direction of the projecting portion 76, is indicated by an arrow T. That is, the arrow L direction in the present disclosure is inclined outward with respect to the X direction.

As illustrated in Fig. 1, the other side of the main body portion 72 in a Y direction (left side in the drawing in Fig. 1) is a first design surface 86A forming a part of a design surface of the resin molded article 70. One side of the projecting portion 76 in the T direction (lower left side in the drawing in Fig. 1) is a second design surface 86B forming a part of the design of the resin molded article 70. The first design surface 86A and the second design surface 86B are continuous.

A surface of the projecting portion 76 opposite from the second design surface 86B is referred to as an opposite surface.

### (Foaming Region)

The main body portion 72 of the present embodiment has a first resin foaming region (hereinafter, appropriately referred to as a "first foaming region") 88A therein. The first foaming region 88A extends in the X direction.

The projecting portion 76 of the present embodiment has a second resin foaming region (hereinafter, appropriately referred to as a "second foaming region") 88B therein. The second foaming region 88B may extend in the L direction. In addition, the first foaming region 88A and the second foaming region 88B may be connected or separated. In the present embodiment, as illustrated in Fig. 1, the first foaming region 88A and the second foaming region 88B are connected.

An average diameter of bubbles in the first foaming region 88A and the second foaming region 88B may be, for example, 0.02 mm or more and 0.15 mm or less.

In the present embodiment, the second foaming region 88B is formed inside a projecting portion 86, but the present disclosure is not limited thereto, and the second foaming region 88B may not be formed inside the projecting portion 86. In addition, the second foaming region 88B may be divided in the L direction of the projecting portion 86, or a foaming ratio may be lower than that of the first foaming region 88A.

### (Distal End Portion 84)

As illustrated in Fig. 1, the distal end portion 84 in the present embodiment is a portion on the distal end side defined by the general portion 78 and a demarcation line D in the projecting portion 76, and has a smaller (thinner) thickness than the general portion 78. In addition, the distal end side (one side in the arrow L direction) of the distal end portion 84 is formed in an arc shape as illustrated in Fig. 1 and has the gate mark 80 formed during molding. In addition, the general portion 78 and the distal end portion 84 of the projecting portion 76 in the present embodiment are defined by a step S as illustrated in Fig. 1. That is, the demarcation line D in the present embodiment is the step S, and the distal end portion 84 is a portion (thin portion) having a smaller thickness than the general portion 78 on one side in the arrow L direction with respect to the step S. Note that since the distal end portion 84 is formed by a second cavity 64 having a small thickness (thin) and a small volume expansion when the metal mold 10 is core-backed, a foaming amount is small, and deformation of the shape due to foaming is small. As described above, the thickness of the foaming region formed inside the distal end portion 84 of the projecting portion 76 is thinner than the foaming region formed inside the main body portion 72, and is equal to or less than the foaming region formed inside the general portion 78 of the projecting portion 86.

In other words, in the projecting portion 76 in the present embodiment, it can be said that a portion connected to the peripheral edge portion 74 of the main body portion 72 is a proximal end portion, and the opposite side is the distal end portion 84.

### (Gate Mark 80)

The gate mark 80 is a portion formed in an injection molding step to be described later, and is a rough fracture surface formed by fracture of a resin material R. In the present embodiment, the gate mark 80 is formed to include the distal end of the arcuate distal end portion 84 in the projecting direction. In other words, the gate mark 80 is formed to include a point (vertex of the distal end portion 84) that is parallel to the T direction which is a thickness direction of the projecting portion 76 and is in contact with a tangent F that is in contact with the distal end portion 84. In other words, the gate mark 80 is formed from one side to the other side in the T direction with respect to the vertex overlapping with the tangent F facing the T direction at the distal end portion 84. In other words, the gate mark 80 is formed on the side opposite from the second design surface 86B at the distal end portion 84.

A length of the distal end portion 84 in the arrow L direction may be, for example, 0.5 mm or more and 2.0 mm or less.

The step S is formed so as to overlap with a parting line PL formed during molding as described later.

Subsequently, a metal mold 10 and a manufacturing step used for manufacturing the resin molded article 70 according to the present embodiment will be described.

### [Metal Mold 10]

A metal mold according to a first embodiment of the present disclosure includes: a fixed mold as a first mold; a movable mold as a second mold that is movable in an opening/closing direction with respect to the fixed mold, that forms, between itself and the fixed mold, a first cavity extending in a direction intersecting the opening/closing direction, and a second cavity extending from an end of the first cavity in the intersecting direction to an opening direction with respect to the fixed mold, and that expands volumes of the first cavity and the second cavity when moved in the opening direction; and a slide mold that is movable relatively with respect to the fixed mold, that forms an end portion of the second cavity in the opening direction, and that maintains its position relative to the fixed mold with respect to a volume expansion operation of the first cavity and the second cavity by the movable mold. Hereinafter, a specific example of the metal mold will be described with reference to the drawings, but the present disclosure is not limited thereto.

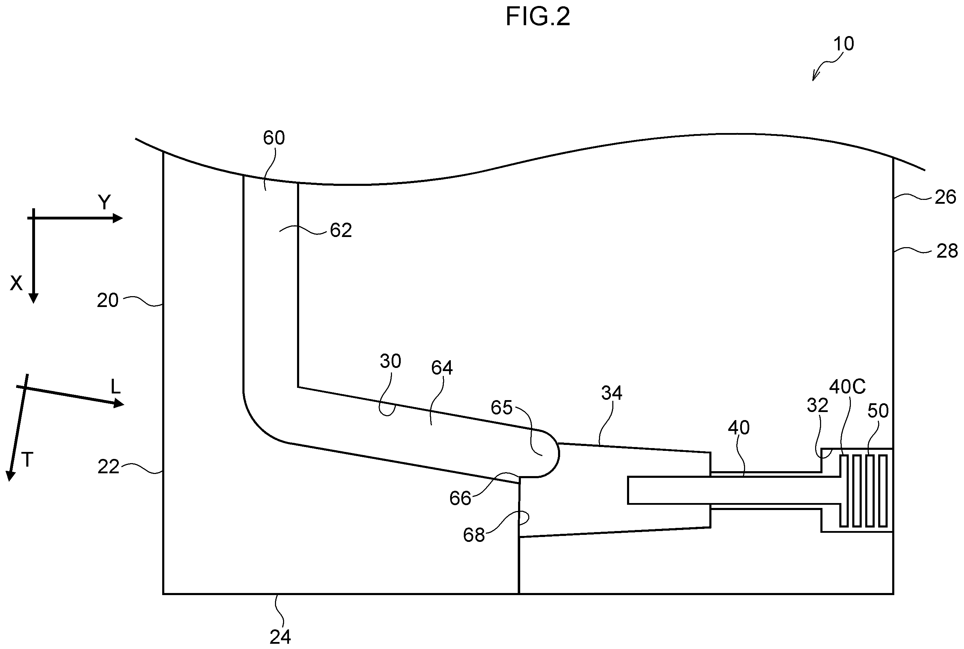

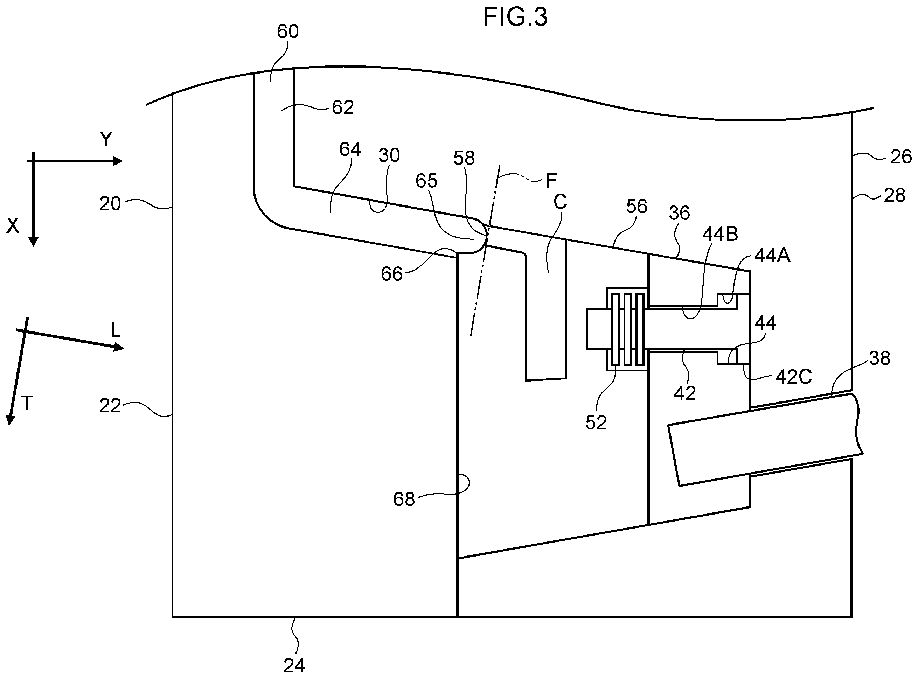

Figs. 2 and 3 are views illustrating a portion of the metal mold 10 according to the first embodiment. The metal mold 10 includes a fixed mold 20, a movable mold 26, a first slide mold 34, a second slide mold 36, and a slide core 56. Figs. 2 and 3 illustrate a portion of the same metal mold 10 in a depth direction of the drawing. The first slide mold 34, the second slide mold 36, and the slide core 56 are examples of the slide mold according to the present disclosure.

### (Fixed Mold 20)

The fixed mold 20 includes a bottom portion 22 extending in the X direction, and a rising portion 24 rising from one side of the bottom portion 22 in the X direction (lower side in the drawings in Figs. 2 and 3) toward one side in the Y direction (right side in the drawings in Figs. 2 and 3). As illustrated in Figs. 2 and 3, the fixed mold 20 has a concave shape with the bottom portion 22 and the rising portion 24. The fixed mold 20 is fixed to an injection molding apparatus (not illustrated).

### (Movable Mold 26)

The movable mold 26 includes a main body portion 72 extending in the X direction, and a protruding portion 30 protruding to the other side in the Y direction (left side in the drawings in Figs. 2 and 3) inside the main body portion 72 in the X direction. As illustrated in Figs. 2 and 3, the movable mold 26 has a convex shape with the main body portion 72 and the protruding portion 30. The movable mold 26 is supported by the injection molding apparatus (not illustrated) so as to be openable and closable in the Y direction. Figs. 2 and 3 illustrate a portion of the same metal mold 10 in the depth direction in the drawings, and thus the movable mold 26 in Fig. 2 and the movable mold 26 in Fig. 3 simultaneously open and close in the Y direction. The movable mold 26 is provided with a stepped through-hole 32 whose diameter is enlarged on one side in the Y direction.

### (First Slide Mold 34)

The first slide mold 34 is an example of a slide mold according to the present disclosure, and is disposed so as to be surrounded by the movable mold 26 between the fixed mold 20 and the movable mold 26 as illustrated in Fig. 2. The first slide mold 34 and the movable mold 26 are separate bodies, and the first slide mold 34 is movable in the Y direction at a timing different from that of the movable mold 26.

As illustrated in Fig. 2, in a state where the movable mold 26 is in contact with the fixed mold 20 (mold closed state), the first slide mold 34 is pressed against the fixed mold 20 by a push pin 40 from one side in the Y direction. The push pin 40 is inserted into the stepped through-hole 32 penetrating the movable mold 26 in the Y direction from one side in the Y direction, and is movable in the Y direction.

The push pin 40 has a flange portion 40C on one side in the Y direction. As illustrated in Fig. 2, in a state where the movable mold 26 is in contact with the fixed mold 20, the movable mold is pressed by the injection molding apparatus (not illustrated) from one side in the Y direction via a biasing member 50. The biasing member 50 is, for example, a coil spring. Further, in the state illustrated in Fig. 2, that is, in the state where the fixed mold 20 and the movable mold 26 are in contact with each other, a length of the biasing member 50 compressed from a natural length is longer than a length by which it moves in a volume expansion operation described later.

### (Second Slide Mold 36)

The second slide mold 36 is another example of a slide mold according to the present disclosure, and is disposed so as to be surrounded by the movable mold 26 between the fixed mold 20 and the movable mold 26 as illustrated in Fig. 3. The second slide mold 36 and the movable mold 26 are separate bodies, and the second slide mold 36 is movable in the Y direction at a timing different from that of the movable mold 26. In the present embodiment, the first slide mold 34 and the second slide mold 36 are separate bodies in the depth direction of the paper surface of Figs. 2 and 3.

In the second slide mold 36, an angular pin 38 is fixed to one side in the Y direction. The angular pin 38 penetrates the movable mold 26 toward the Y direction while inclining in the X direction.

The second slide mold 36 is provided with a stepped through-hole 44 whose diameter is enlarged on one side in the Y direction.

### (Slide Core 56)

As illustrated in Fig. 3, the slide core 56 is disposed between the fixed mold 20 and the second slide mold 36 and is in contact with the fixed mold 20. The slide core 56 includes a gate 58 that opens toward the other side in the Y direction, and a flow path C that causes the gate 58 and the injection molding apparatus (not illustrated) to communicate with each other. The flow path C communicates in the depth direction of the paper surface in Fig. 3.

In the slide core 56, the push pin 42 is fixed to one side in the Y direction. The push pin 42 has a flange portion 42C having a larger diameter than a reduced diameter portion 44B of the stepped through-hole 44 on one side in the Y direction. As illustrated in Fig. 3, the flange portion 42C of the push pin 42 is located inside an enlarged diameter portion 44A of the stepped through-hole 44 of the second slide mold 36 in a state where the movable mold 26 is in contact with the fixed mold 20.

In addition, the slide core 56 is pressed against the fixed mold 20 by the second slide mold 36 via the biasing member 50 in a state where the movable mold 26 is in contact with the fixed mold 20 as illustrated in Fig. 3. The biasing member 50 is, for example, a coil spring. A surface where the fixed mold 20 and the slide core 56 are in contact with each other is referred to as a dividing surface 68. Further, in the state illustrated in Fig. 3, that is, in the state where the fixed mold 20 and the movable mold 26 are in contact with each other, a length of the biasing member 50 compressed from a natural length is longer than a length by which it moves in a volume expansion operation described later.

### (Cavity 60)

Here, as illustrated in Figs. 2 and 3, in a state where the fixed mold 20 and the movable mold 26 are in contact with each other, a cavity 60 is formed by the fixed mold 20, the movable mold 26, the first slide mold 34, the second slide mold 36, and the slide core 56. The cavity 60 includes a first cavity 62 and a second cavity 64.

As illustrated in Figs. 2 and 3, the first cavity 62 of the cavity 60 extends in the X direction and is a portion constituting most of the resin molded article 70 in the X direction. The second cavity 64 is a portion extending from an end of the first cavity 62 on one side in the X direction toward the X direction and one side in the Y direction (lower right side in the drawings in Figs. 2 and 3). That is, the Y direction is also an opening/closing direction in the present disclosure.

As will be described later, in the present disclosure, the resin molded article 70 formed by injecting the resin material R into the cavity 60 has a design surface on a side in contact with the fixed mold 20. That is, the resin material R injected into the first cavity 62 becomes the main body portion 72 having the first design surface 86A, and the resin material R injected into the second cavity 64 becomes the projecting portion 76 having the second design surface 86B.

As illustrated in Fig. 2, in the present embodiment, at a distal end of the second cavity 64, a step 66 is formed in the T direction between the rising portion 24 of the fixed mold 20 and the first slide mold 34.

As illustrated in Fig. 2, in the present embodiment, the step S in the resin molded article 70 is the demarcation line D defining the general portion 78 and the distal end portion 84 in the projecting portion 76 of the resin molded article 70. That is, in the present embodiment, the surface where the fixed mold 20 and the first slide mold 34 are in contact with each other is also a portion where the demarcation line D is formed in the resin molded article 70.

As illustrated in Fig. 2, in the present embodiment, on the surface where the fixed mold 20 and the first slide mold 34 are in contact with each other, the resin material R oozes out at the time of injecting a resin (at the time of injection) to be described later, and thus the parting line PL which is a linear protrusion is formed when viewed from the second design surface 86B side. That is, in the present embodiment, the surface where the fixed mold 20 and the first slide mold 34 are in contact with each other is also a portion where the parting line PL is formed in the resin molded article 70.

As illustrated in Fig. 3, in the present embodiment, at the distal end of the second cavity 64, the step 66 is formed in the T direction between the rising portion 24 of the fixed mold 20 and the slide core 56. The step 66 is formed such that the dividing surface 68 on the slide core 56 side is located more inward in the X direction. In other words, the step S of the projecting portion 76 is formed by the fixed mold 20 and the slide core 56. That is, the T direction is also a direction intersecting the opening/closing direction in the present disclosure.

As illustrated in Fig. 3, in the present embodiment, the step S in the resin molded article 70 is the demarcation line D defining the general portion 78 and the distal end portion 84 in the projecting portion 76 of the resin molded article 70. That is, in the present embodiment, the surface where the fixed mold 20 and the slide core 56 are in contact with each other is also a portion where the demarcation line D is formed in the resin molded article 70.

As illustrated in Fig. 3, in the present embodiment, on the surface where the fixed mold 20 and the slide core 56 are in contact with each other, the resin material R oozes out at the time of injecting a resin to be described later, and thus the parting line PL which is a linear protrusion is formed on the second design surface 86B side. That is, in the present embodiment, the surface where the fixed mold 20 and the slide core 56 are in contact with each other is also a portion where the parting line PL is formed in the resin molded article 70.

In the present embodiment, a distal end portion 65 of the second cavity 64 has an arc shape as illustrated in Figs. 2 and 3.

As illustrated in Fig. 3, in the present embodiment, the gate 58 of the slide core 56 is located in the vicinity of the distal end of the second cavity 64. In other words, the fixed mold 20 and the slide core 56 form the gate mark 80 on the distal end side of the projecting portion 76 with respect to the step S. In other words, the fixed mold 20 and the slide core 56 form the gate mark 80 on the side opposite from the second design surface 86B in the thickness direction of the projecting portion 76.

### (Volume Expansion Operation)

As will be described later, in the metal mold 10 in the present disclosure, the movable mold 26 can slightly move in the Y direction in a state where the resin material R is injected into the cavity 60. That is, the metal mold 10 in the present disclosure performs a volume expansion operation of the cavity 60 called a so-called core back when the movable mold 26 moves in the opening/closing direction. Further, in the metal mold 10 in the present disclosure, the resin material R is injected into the cavity 60, and the resin material R in the cavity 60 foams when the volume of the cavity 60 expands. Since the surface of the resin material R in contact with the metal mold is likely to be solidified (hardened) due to a decrease in temperature, when the core back is performed, the surface of the resin material R is less likely to foam and the foaming occurs inside. In the resin molded article, a surface portion having a small foaming amount is also generally referred to as a skin region. In addition, depending on the opening direction of the movable mold 26, since the expansion of the volume of the second cavity 64 (cavity for molding the projecting portion 76) is smaller than the expansion of the volume of the first cavity 62, the foaming ratio of the second foaming region 88B tends to be lower than the foaming ratio of the first foaming region 88A. In addition, a proportion occupied by the skin region of the projecting portion 76 may be larger than that of the main body portion 72.

### The "slightly" moving length may be 1.5 mm, for example.

### (Resin Material)

The resin material R is preferably a resin material R containing a resin and a foaming agent, and may contain other components such as additives as necessary.

Examples of the resin used for the resin material R include at least one kind selected from the group consisting of a polyethylene-based resin, a polypropylene-based resin (PP), a composite polypropylene-based resin (PPC), a polystyrene-based resin, a polyethylene terephthalate-based resin, a polyvinyl alcohol-based resin, a vinyl chloride-based resin, an ionomer-based resin, a polyamide-based resin, an acrylonitrile-butadiene-styrene copolymer resin (ABS), a polycarbonate-based resin, and a polyphenylene sulfide resin (PPS). Among them, at least one kind selected from the group consisting of a polypropylene-based resin (PP), a composite polypropylene-based resin (PPC), and an acrylonitrile-butadiene-styrene copolymer resin (ABS) is preferable.

Examples of the foaming agent include organic foaming agents such as azodicarbonamide, and inorganic foaming agents such as sodium hydrogen carbonate (another name: sodium bicarbonate and sodium bicarbonate). In the foam molding of interior parts for automobiles, an organic foaming agent is preferable from the viewpoint of improving environmental test performance, coating film performance (hot water resistance and the like), and the like.

Examples of the organic foaming agent include azodicarbonamide (ADCA), N,N-dinitrosopentamethylenetetramine (DPT), 4,4'-oxybisbenzenesulfonylhydrazide (OBSH), and hydrazodicarbonamide (HDCA), and azodicarbonamide (ADCA) is preferable. In particular, in the case of manufacturing an exterior article, it is preferable to use azodicarbonamide (ADCA) in which the decomposition product contains substantially no water.

The content of azodicarbonamide (ADCA) in the total amount of the foaming agent is preferably 50 mass% or more, more preferably 80 mass% or more, still more preferably 90 mass% or more, and particularly preferably 95 mass% or more.

A decomposition temperature of the foaming agent is preferably 50°C or higher and 250°C or lower, and more preferably 50°C or higher and 220°C or lower. Depending on a use form, the decomposition temperature of the foaming agent may be 130°C or lower and 250°C or lower.

### (Injection Molding Step)

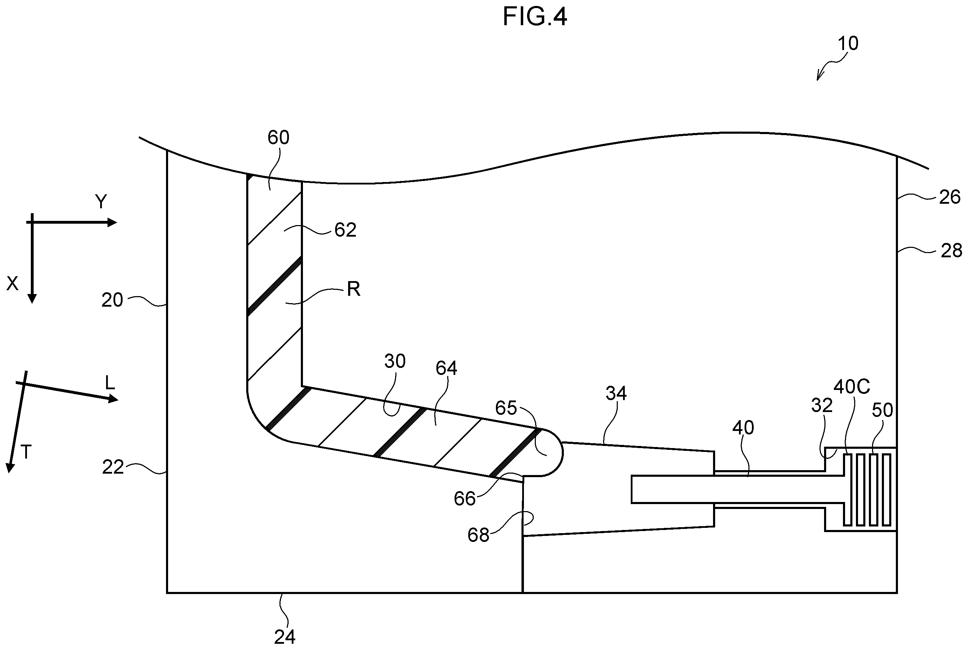

Subsequently, the injection molding step in the present embodiment will be described with reference to Figs. 4 to 9 as appropriate.

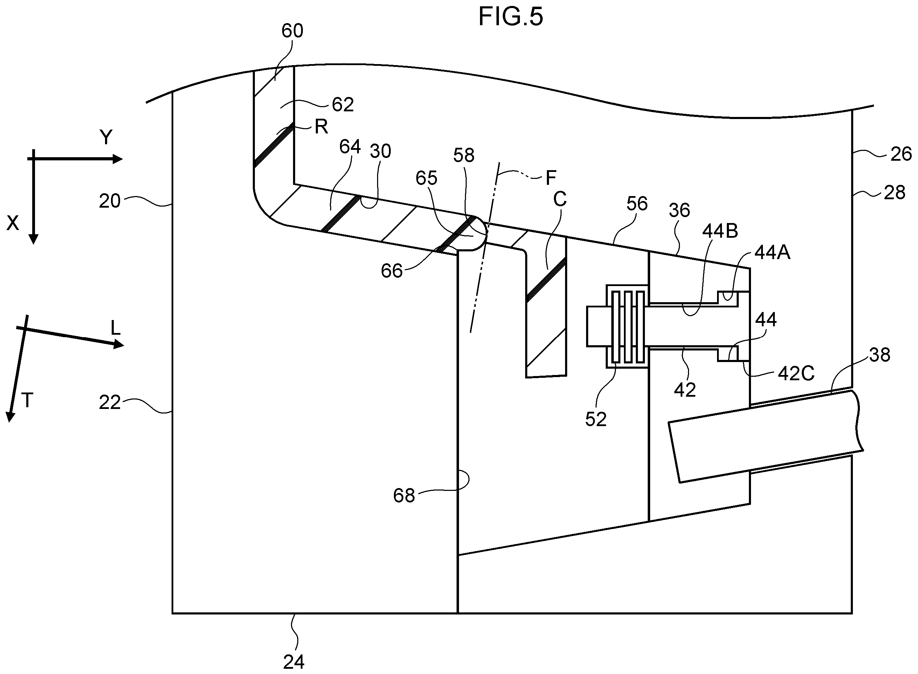

First, as illustrated in Figs. 4 and 5, in a state where the fixed mold 20 and the movable mold 26 are in contact with each other, the molten resin material R flows into the cavity 60 from the injection molding apparatus (not illustrated) through the flow path C and the gate 58. As illustrated in Fig. 4, in the state where the fixed mold 20 and the movable mold 26 are in contact with each other, the first slide mold 34 is in contact with the fixed mold 20, and thus, the distal end portion 65 of the second cavity 64 is formed. In addition, as illustrated in Fig. 5, in the state where the fixed mold 20 and the movable mold 26 are in contact with each other, the slide core 56 is in contact with the fixed mold 20, and thus, the distal end portion 65 of the second cavity 64 is formed.

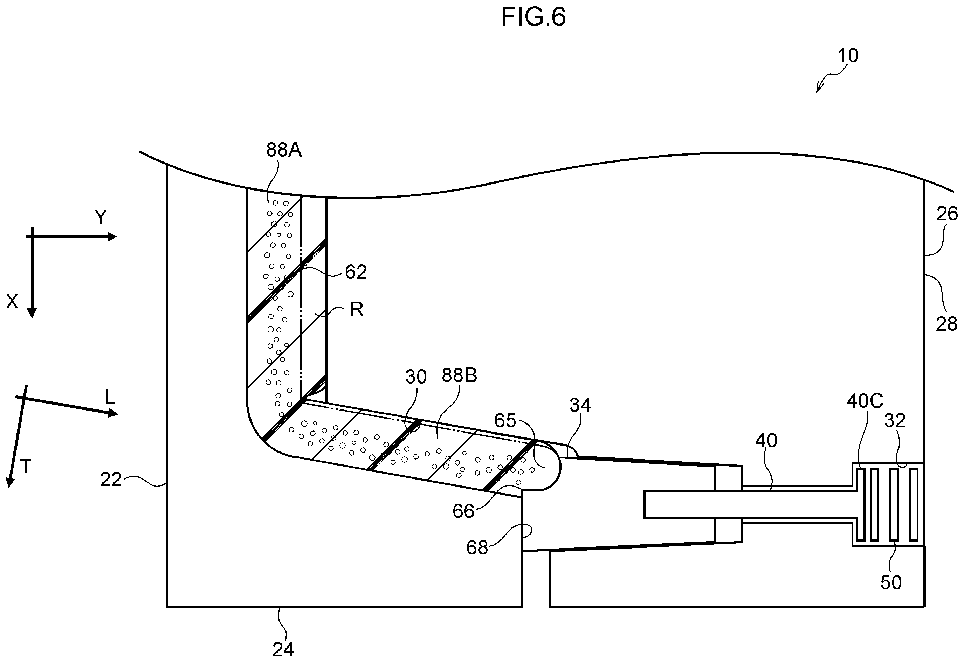

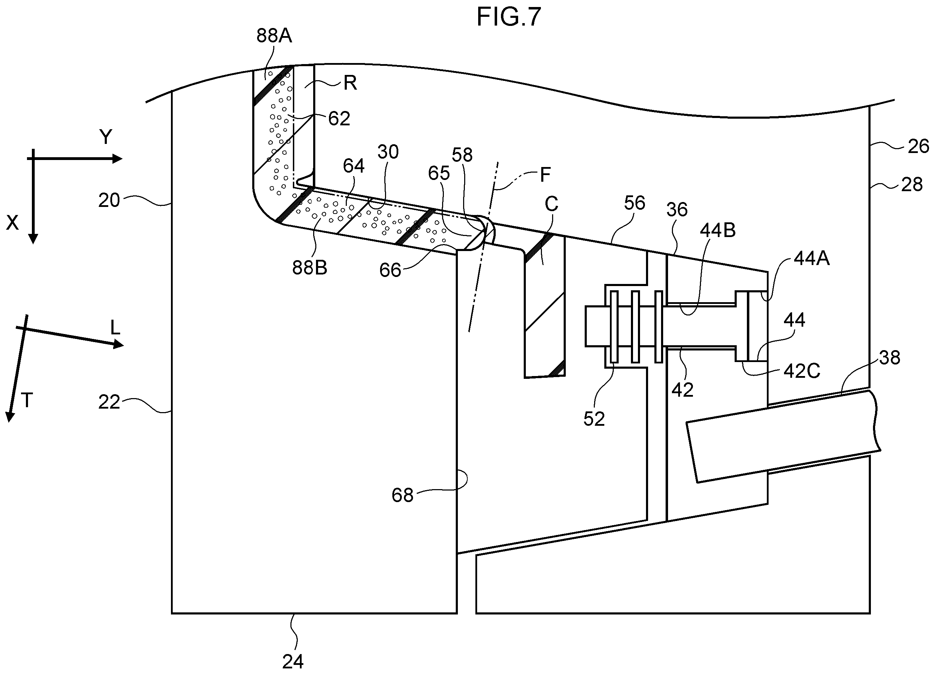

When a predetermined time elapses after the resin material R is injected into the cavity 60, the resin material R is cooled and cured from the outside of the cavity 60 (portion in contact with the fixed mold 20, the movable mold 26, the first slide mold 34, and the slide core 56). In a state where the outside of the cavity 60 starts to be cured, the movable mold 26 performs a volume expansion operation to be in a state illustrated in Figs. 6 and 7.

As illustrated in Figs. 6 and 7, in a state where the movable mold 26 performs a volume expansion operation, the volume in the cavity 60 is expanded, so that a pressure in the cavity 60 decreases. In this state, the resin material R is foamed inside the first cavity 62 and the second cavity 64 by the foaming agent mixed with the resin material R.

Here, as illustrated in Fig. 6, in a state where the movable mold 26 performs a volume expansion operation, the first slide mold 34 maintains its position relative to the fixed mold 20 by the push pin 40 pressed by the biasing member 50. In other words, even in a state where the movable mold 26 performs a volume expansion operation, a shape of the distal end portion 65 of the cavity 60 formed by the first slide mold 34 before the volume expansion operation is performed is maintained. Therefore, since a foaming amount of the resin is small inside the distal end portion 84 of the molded resin molded article 70, deformation of the shape due to foaming of the distal end portion 84 is suppressed.

In addition, as illustrated in Fig. 7, in a state where the movable mold 26 performs a volume expansion operation, the slide core 56 is pressed by the biasing member 50 to maintain its position relative to the fixed mold 20. In other words, even in a state where the movable mold 26 performs a volume expansion operation, the shape of the distal end portion 65 of the cavity 60 formed by the slide core 56 before the volume expansion operation is performed is maintained.

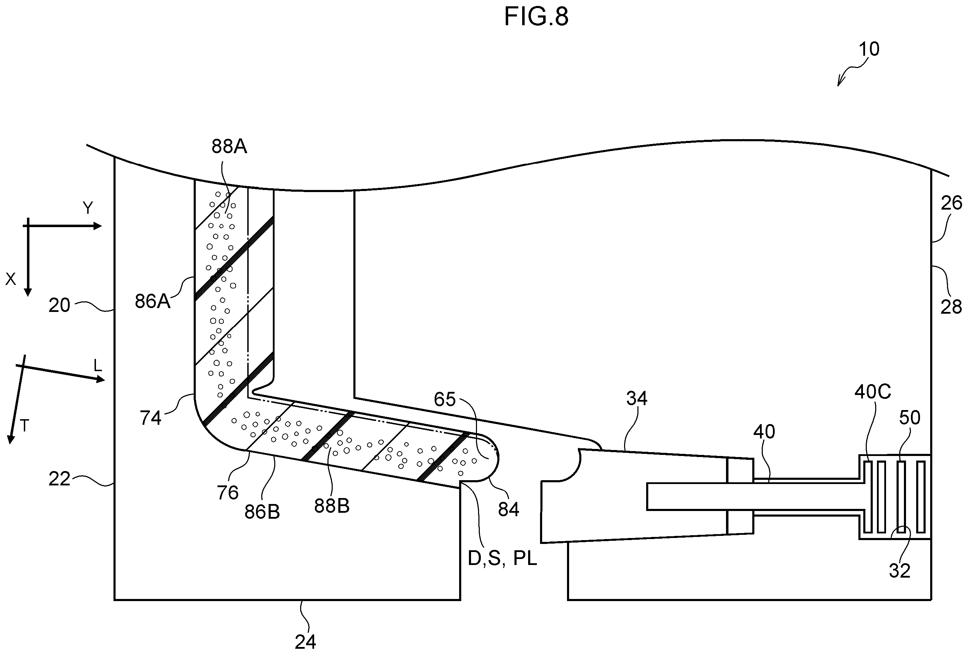

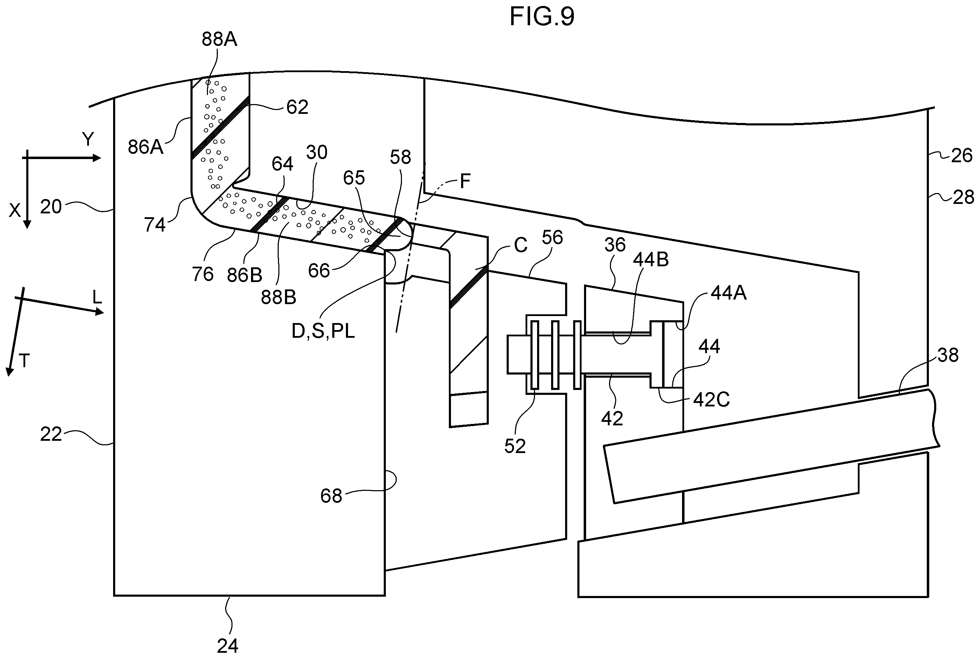

Then, in a state where the resin material R in the cavity 60 is further cooled and the entire resin material R is cured, the movable mold 26 moves further in the Y direction to be in a state illustrated in Figs. 8 and 9.

As illustrated in Fig. 8, when the movable mold 26 moves further to one side in the Y direction than the state where the volume expansion operation is performed, the biasing member 50 extends to the natural length, and thus the pressing of the push pin 40 by the biasing member 50 is eliminated. When the flange portion 40C of the push pin 40 is caught by the stepped through-hole 32 of the movable mold 26, the first slide mold 34 moves to one side in the Y direction together with the movable mold 26. As a result, as illustrated in Fig. 8, the contact between the first slide mold 34 and the fixed mold 20 is eliminated.

In addition, as illustrated in Fig. 9, when the movable mold 26 moves further to one side in the Y direction than the state where the volume expansion operation is performed, the biasing member 50 extends to the natural length, and thus the pressing by the biasing member 50 is eliminated. In the second slide mold 36, the angular pin 38 is guided to one side in the X direction by the through-hole of the movable mold 26 that moves to one side in the Y direction. As a result, the second slide mold 36 and the slide core 56 move to one side in the X direction.

Thereafter, when the slide core 56 moves further to one side in the X direction from the state illustrated in Fig. 9, the cured resin material R is cut at a portion of the gate 58. As a result, a rough fracture surface called a so-called gate mark 80 is formed at a position corresponding to the gate 58 of the distal end portion 84 in the cavity 60 as illustrated in Fig. 1, which is a cut mark.

Then, when the movable mold 26 moves further to one side in the Y direction with respect to the fixed mold 20, the cured resin material R is taken out from the fixed mold 20 as the resin molded article 70 as illustrated in Fig. 1. As described above, as illustrated in Fig. 1, in the resin molded article 70 in the present embodiment, a portion in contact with the fixed mold 20 in the cavity 60 is a design surface.

### (Comparative Example)

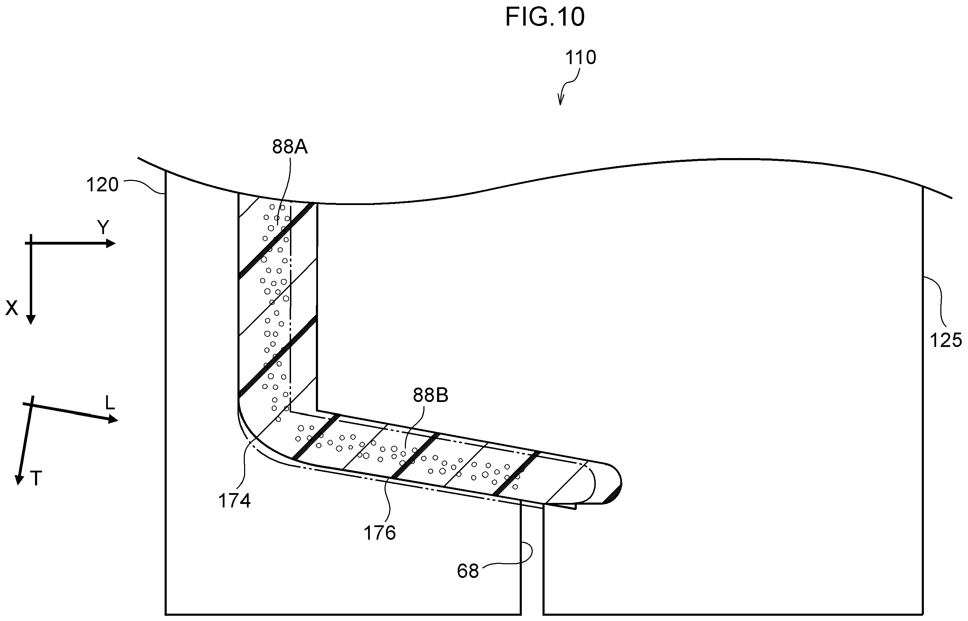

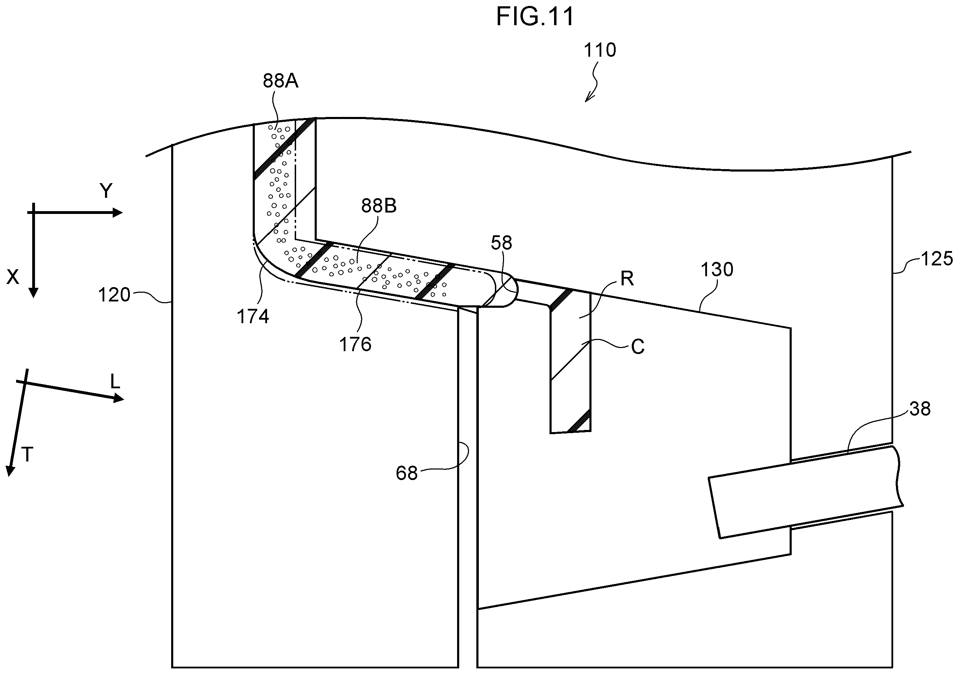

Here, Figs. 10 and 11 illustrate a state in which a metal mold 110, which is a comparative example with the metal mold 10 according to the present embodiment, is subjected to a volume expansion operation similarly to the metal mold 10 according to the present embodiment.

As illustrated in Fig. 10, in the metal mold 110 according to the comparative example, a portion corresponding to the first slide mold 34 according to the present embodiment is a part of a movable mold 125. In other words, the distal end portion 65 of the second cavity 64 moves to one side in the Y direction together with the movable mold 125 in a state where a volume expansion operation is performed.

As illustrated in Fig. 11, in the metal mold 110 according to the comparative example, portions corresponding to the second slide mold 36 and the slide core 56 are integrally formed as a slide mold 130. Unlike the slide core 56 according to the present embodiment, the slide mold 130 is not biased toward the fixed mold 120, and thus is not in contact with the fixed mold 120 in a state where a volume expansion operation is performed. In other words, the distal end portion 65 of the second cavity 64 moves to one side in the Y direction together with the movable mold 125 in a state where a volume expansion operation is performed.

In this case, as illustrated in Figs. 10 and 11, when the movable mold 125 performs a volume expansion operation, the distal end of the second cavity 64 is pulled by the movable mold 125 and the slide mold 130 and moves to one side in the Y direction. Since the resin material R is not cured at the time point of performing the volume expansion operation, a boundary portion between the bottom portion 22 of the cavity 60 and the second cavity 64 is deformed toward one side in the Y direction. The deformation of the boundary portion deteriorates the designability of the design surface in the resin molded article 70.

### (Operations and Effects)

The following operations and effects can be obtained in the metal mold 10 and the resin molded article 70 formed by the metal mold 10 in the present embodiment.

In the metal mold 10 in the present embodiment, the slide mold is pressed against the fixed mold 20 in the vicinity of the distal end of the second cavity 64 in the opening/closing direction and forms the distal end of the second cavity 64 in the cavity 60 in the opening/closing direction, and maintains the state of being pressed against the fixed mold 20 when the movable mold 26 moves in the opening/closing direction. As a result, when the movable mold 26 expands the volume of the cavity 60, since the slide mold forming the distal end of the second cavity 64 does not move, when the movable mold 26 moves in the opening/closing direction, the design surface is hardly deformed from the first cavity 62 to the second cavity 64.

Therefore, in the metal mold 10 in the present embodiment, it is possible to reduce the possibility that the design surface is deformed when the resin molded article 70 is formed and the designability of the design surface in the formed resin molded article 70 is impaired.

In addition, in the metal mold 10 in the present embodiment, when the movable mold 26 expands the volume of the cavity 60, the slide mold is pressed against the fixed mold 20. As a result, in the metal mold 10 in the present embodiment, it is possible to reduce the possibility that the distal end of the projecting portion 76 is deformed as compared with a case where the slide mold is not pressed against the fixed mold 20.

In addition, in the metal mold 10 in the present embodiment, the slide mold is pressed against the fixed mold 20 by the biasing member 50 provided at the movable mold 26. Therefore, when a distance between the fixed mold 20 and the movable mold 26 is narrow, the slide mold is pressed against the fixed mold 20, and when the distance between the fixed mold 20 and the movable mold 26 is wide, the pressing of the slide mold against the fixed mold 20 is eliminated. This makes it possible to simplify the configuration of the metal mold 10 in the present embodiment capable of reducing the possibility of impairing the designability of the design surface.

In the metal mold 10 in the present embodiment, the slide mold includes the gate 58 that injects resin from the distal end of the second cavity 64 in the opening/closing direction, and is movable toward an outer side in the intersecting direction with respect to the fixed mold 20. As a result, it is difficult for a person looking at a design surface of the resin molded article 70 molded using the metal mold 10 in the present embodiment to visually recognize the gate mark 80.

Therefore, the possibility that the designability of the design surface in the resin molded article 70 formed by the metal mold 10 in the present embodiment is impaired can be reduced.

In addition, since the resin molded article 70 in the present embodiment is formed using the metal mold 10 in the present embodiment, the design surface is hardly deformed from the main body portion 72 corresponding to the first cavity 62 to the projecting portion 76 corresponding to the second cavity 64.

Therefore, in the resin molded article 70 in the present embodiment, the possibility of impairing the designability of the design surface can be reduced as compared with the resin molded article 70 formed without using the metal mold 10 in the present embodiment.

In the resin molded article 70 in the present embodiment, the distal end portion 84 of the projecting portion 76 has the gate mark 80 formed on the second design surface 86B side in the thickness direction of the distal end portion 84 of the projecting portion 76, and the distal end portion 84 is formed on the inner side of the main body portion 72 than the demarcation line D defining the general portion 78 and the distal end portion 84. That is, since the gate mark 80, which is located on the opposite side of the second design surface 86B from the general portion 78 on the second design surface 86B, is likely to be confused with the demarcation line D, the gate mark 80 is inconspicuous from a person looking at a design surface. Therefore, in the resin molded article 70 in the present embodiment, since the gate mark 80 is inconspicuous on the design surface, the possibility of impairing the designability of the design surface is reduced.

In the resin molded article 70 in the present embodiment, the demarcation line D is the step S directed toward the inner side of the main body portion 72 than the second design surface 86B of the general portion 78. As a result, in the resin molded article 70, the demarcation line D is the step S, and the parting line PL is inconspicuous from a person looking at a design surface, so that the possibility of impairing the designability of the design surface is reduced.

In the resin molded article 70 in the present embodiment, the parting line PL is formed on the demarcation line D on the second design surface 86B.

In addition, in the resin molded article 70 in the present embodiment, the parting line PL is formed on the demarcation line D which is the boundary between the general portion 78 and the distal end portion 84, and the parting line PL is inconspicuous from a person looking at a design surface, so that the possibility of impairing the designability of the design surface is reduced.

In addition, in the resin molded article 70 in the present embodiment, the parting line PL is at a position that is 0.5 mm or more and 2.0 mm or less from the distal end of the projecting portion 76, and the parting line PL is inconspicuous from a person looking at a design surface, so that the possibility of impairing the designability of the design surface is reduced.

In addition, in the resin molded article 70 in the present embodiment, since the shape of the distal end portion 84 is an arc shape, the gate mark 80 is likely to become small during molding. Therefore, in the resin molded article 70 in the present embodiment, since the gate mark 80 is smaller than when the shape of the distal end portion 84 is not an arc shape, the possibility of impairing the designability of the design surface is reduced.

In the resin molded article 70 in the present embodiment, since the end of the gate mark 80 is connected to the end of the surface of the projecting portion 76 opposite from the second design surface 86B, it is difficult for a person looking at a design surface to visually recognize the gate mark 80. Therefore, in the resin molded article 70 in the present embodiment, the gate mark 80 becomes inconspicuous as compared with a case where the end of the gate mark 80 is not connected to the end of the surface of the projecting portion 76 opposite from the second design surface 86B, so that the possibility of impairing the designability of the design surface is reduced.

In the resin molded article 70 in the present embodiment, since the first foaming region 88A and the second foaming region 88B are formed, a weight of the resin molded article can be reduced.

In the resin molded article 70 in the present embodiment, since the gate mark 80 is formed at the portion on the side opposite from the second design surface 86B in the thickness direction of the projecting portion 76 with respect to the distal end in the projecting direction at the distal end portion 84 of the projecting portion 76, it is difficult for a person looking at a design surface to visually recognize the gate mark 80.

Therefore, in the resin molded article 70 in the present embodiment, since it is difficult to visually recognize the gate mark 80 on the design surface, the possibility of impairing the designability of the design surface is reduced.

In addition, in the resin molded article 70 in the present embodiment, since the shape of the distal end portion 84 is an arc shape, the gate mark 80 is likely to become small during molding. Therefore, in the resin molded article 70 in the present embodiment, since it is difficult to visually recognize the gate mark 80 as compared with a case where the shape of the distal end portion 84 is not an arc shape, the possibility of impairing the designability of the design surface is reduced.

In the resin molded article 70 in the present embodiment, since the end of the gate mark 80 is connected to the end of the surface of the projecting portion 76 opposite from the second design surface 86B, it is difficult for a person looking at a design surface to visually recognize the gate mark 80. Therefore, in the resin molded article 70 in the present embodiment, since it is difficult to visually recognize the gate mark 80 as compared with a case where the end of the gate mark 80 is not connected to the end of the surface of the projecting portion 76 opposite from the second design surface 86B, the possibility of impairing the designability of the design surface is reduced.

In the resin molded article 70 in the present embodiment, since the first foaming region 88A and the second foaming region 88B are formed, a weight of the resin molded article 70 can be reduced.

### (Modifications)

In the above description, the first slide mold 34 and the second slide mold 36 are separate bodies, but the present disclosure is not limited thereto. For example, instead of being supported by the angular pin 38 with respect to the movable mold 26, the second slide mold 36 may be pressed against the fixed mold 20 by the push pin 40 similarly to the first slide mold 34. In this case, the first slide mold 34 and the second slide mold 36 may be integrated.

In the above description, the slide core 56 and the second slide mold 36 are separate bodies, but the present disclosure is not limited thereto, and the second slide mold 36 and the slide core 56 may be integrated.

Even in such a case, when the movable mold 26 performs a volume expansion operation and the resin material R foams, when portions corresponding to the first slide mold 34 and the slide core 56 are in contact with the fixed mold 20, the same operations and effects as those of the metal mold 10 according to the first embodiment can be obtained.

Further, in the above description, in the resin molded article 70 in the present embodiment, the demarcation line D and the parting line PL overlap each other, but the present disclosure is not limited thereto, and the demarcation line D and the parting line PL may have a shape that does not overlap each other. In this case, it is desirable that the parting line PL is formed on the distal end side of the demarcation line D in the resin molded article. As a result, since the parting line PL becomes inconspicuous due to the demarcation line D and the step S, the possibility of impairing the designability of the design surface is reduced.

In the above description, in the present embodiment, the resin molded article 70 having a foaming region therein is described as an example of the resin molded article, but the technique in the present disclosure is not limited thereto. That is, the same applies to a resin molded article having no foaming region in the main body portion 72 and the projecting portion 76. Also in this case, similarly to the resin molded article 70 in the present embodiment, since the gate mark 80 is inconspicuous on the design surface from a person looking at a design surface, the possibility of impairing the designability of the design surface is reduced. In addition, similarly to the resin molded article 70 in the present embodiment, since it is difficult for a person looking at a design surface to visually recognize the gate mark 80 on the design surface, the possibility of impairing the designability of the design surface is reduced.

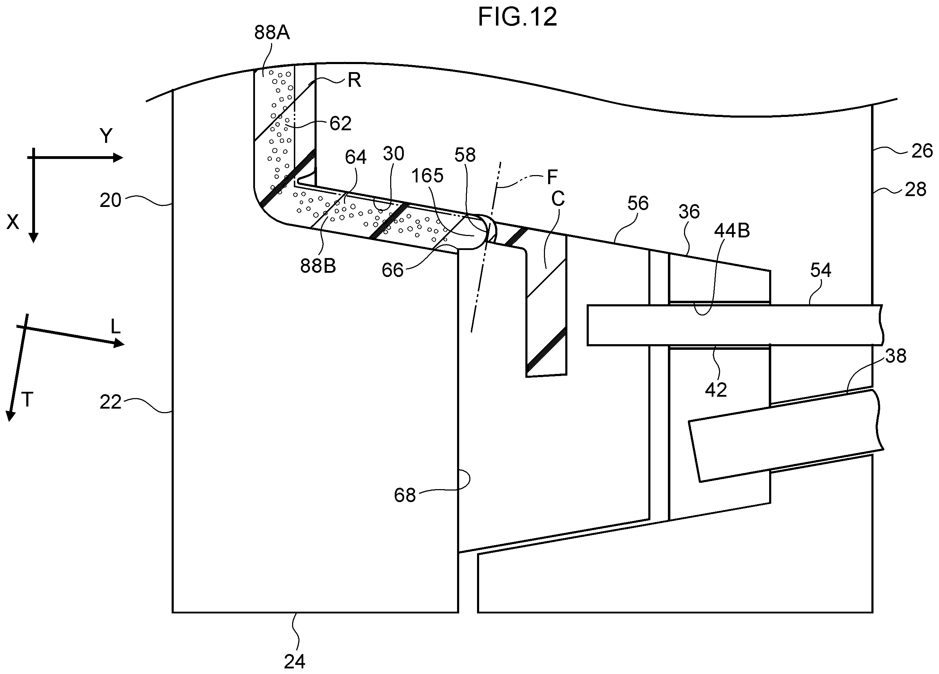

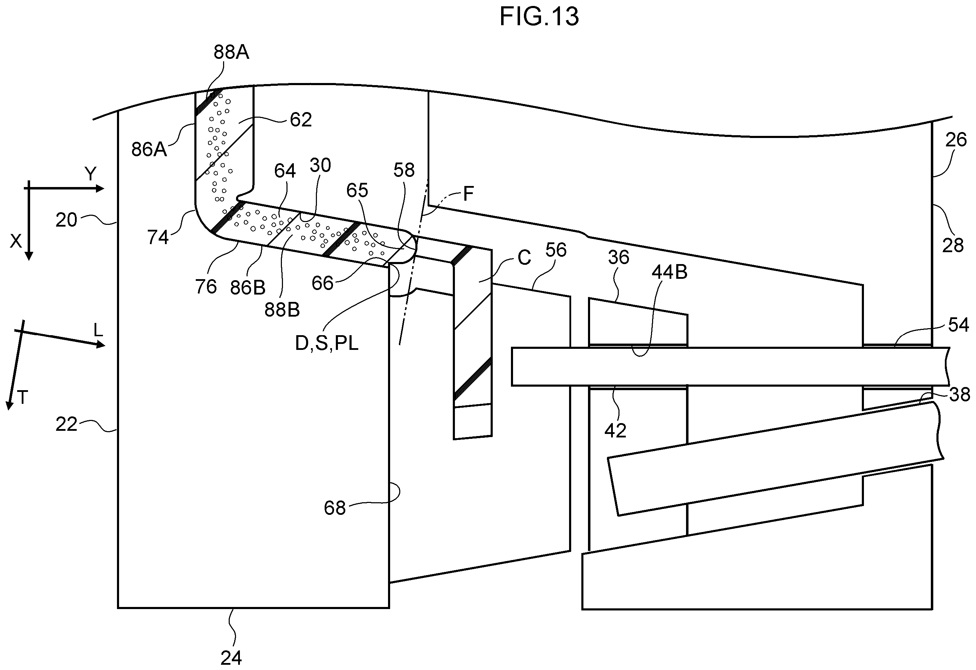

Subsequently, a second embodiment in the present disclosure will be described with reference to Figs. 12 and 13 as appropriate. Note that, among the configurations according to the present embodiment, configurations similar to those of the first embodiment are denoted by the same reference numerals, and a specific description thereof may be omitted.

### [Second Embodiment]

Fig. 12 illustrates a state in which a metal mold 10 according to a second embodiment performs a volume expansion operation. In the metal mold 10 according to the present embodiment, a slide actuator 54 penetrates the movable mold 26 from one side in the Y direction and is connected to the slide core 56. That is, in the present embodiment, the slide core 56 is pressed against the fixed mold 20 by the slide actuator 54 in a state where the metal mold 10 performs a volume expansion operation.

### Other configurations are the same as those of the first embodiment.

In the metal mold 10 in the present embodiment, as illustrated in Fig. 13, when the fixed mold 20 moves further to one side in the Y direction than in the state where a volume expansion operation is performed, the slide core 56 is guided to one side in the X direction together with the second slide mold 36. As a result, also in the present embodiment, the movable mold 26 is separated from the fixed mold 20, whereby the resin material R is cut at the portion of the gate 58.

### (Operations and Effects)

As illustrated in Fig. 12, in the present embodiment, the slide mold is pressed against the fixed mold 20 when the movable mold 26 performs a volume expansion operation by the slide actuator 54 instead of the biasing member 50. In other words, also in the present embodiment, the contact between the slide mold and the fixed mold 20 is not eliminated at the time point of performing a volume expansion operation. As a result, also in the present embodiment, when the movable mold 26 expands the volume of the cavity 60, since the slide mold forming the distal end of the second cavity 64 does not move, when the movable mold 26 moves in the opening/closing direction, the design surface is hardly deformed from the first cavity 62 to the second cavity 64.

Therefore, also in the metal mold 10 in the present embodiment, it is possible to reduce the possibility that the design surface is deformed when the resin molded article 70 is formed, and the designability of the design surface in the formed resin molded article 70 is impaired.

Other operations and effects obtained by the metal mold 10 in the first embodiment can be similarly obtained in the present embodiment.

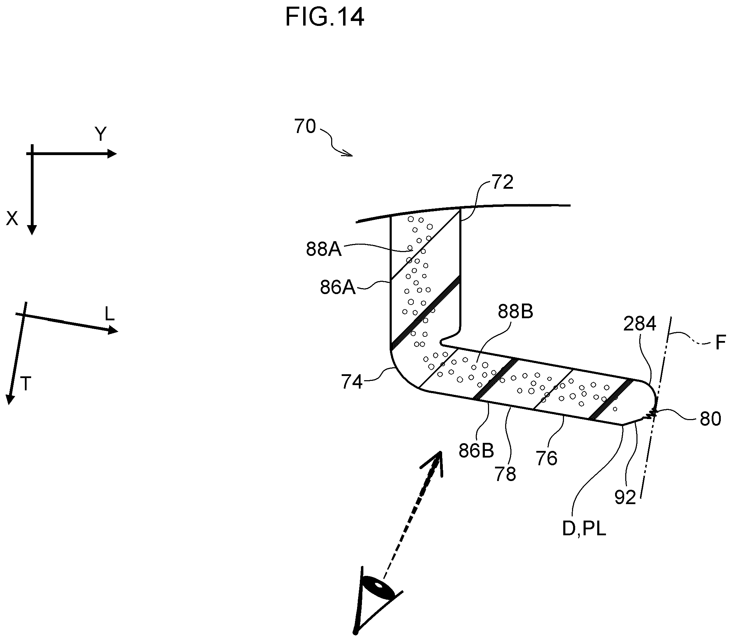

Subsequently, a third embodiment in the present disclosure will be described with reference to Figs. 14 to 16 as appropriate. Note that, among the configurations according to the present embodiment, configurations similar to those of the first embodiment are denoted by the same reference numerals, and a specific description thereof may be omitted.

### [Third Embodiment]

### (Resin Molded Article 70)

Fig. 14 is a view illustrating a resin molded article 70 in a third embodiment. In the present embodiment, as compared with the resin molded article 70 of the first embodiment, the step S is not formed at a distal end portion 284 of the projecting portion 76, and a tapered portion 92 is formed. Further, in the resin molded article 70 in the present embodiment, the gate mark 80 is formed on one side in the T direction with respect to the vertex on one side in the arrow L direction within the range of the distal end portion 284 in the T direction. In other words, in the present embodiment, the gate mark 80 is formed on one side in the T direction with respect to a point (vertex of the distal end portion 284) that is parallel to the T direction which is a thickness direction of a projecting portion 276 and is in contact with a tangent F in contact with the distal end portion 284. In other words, in the resin molded article 70 in the present embodiment, the gate mark 80 is not formed on the other side in the T direction with respect to the vertex on one side in the arrow L direction within the range of the distal end portion 284 in the T direction.

As illustrated in Fig. 14, the tapered portion 92 is a portion where the thickness decreases from the parting line PL which is the demarcation line D defining the general portion 78 and the distal end portion 284 toward the other side in the T direction (inner side of the main body portion 72) as it goes toward one side in the arrow L direction. In other words, the tapered portion 92 in the present embodiment gradually decreases the thickness by changing the thickness of the projecting portion 76 in the T direction, similarly to the step S in the first embodiment.

The shape of other portions is the same as that of the resin molded article 70 according to the first embodiment.

Subsequently, a metal mold 10 for manufacturing the resin molded article 70 according to the present embodiment will be described.

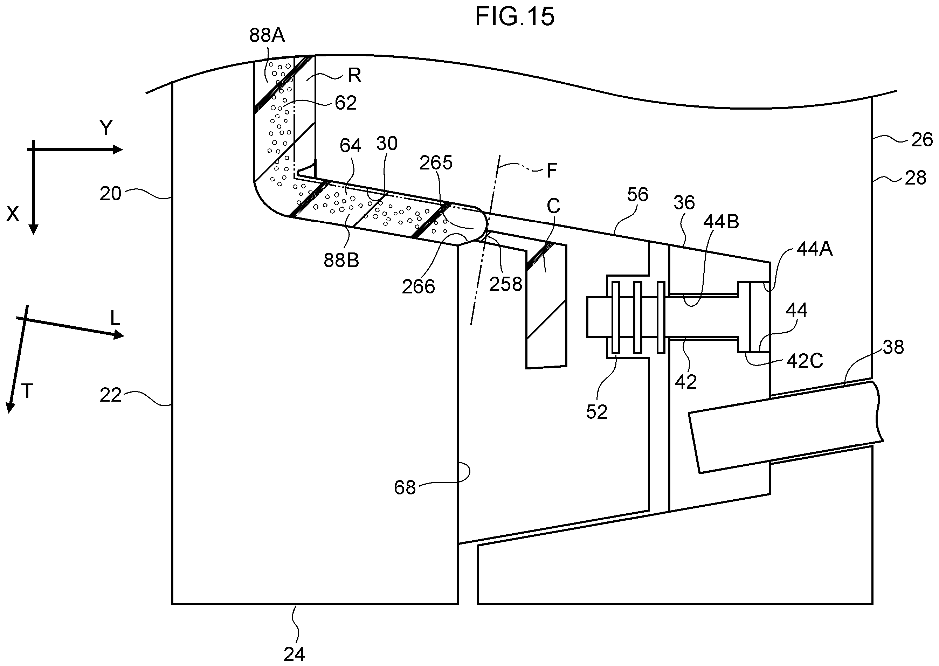

Fig. 15 is a view illustrating a metal mold 10 in the present embodiment. In the metal mold 10 in the present embodiment, one side in the arrow L direction from the dividing surface 68 where the fixed mold 20 and the slide core 56 are in contact with each other is an inclined portion 266 in which the thickness of the projecting portion 76 decreases toward the other side in the T direction as it goes toward the one side in the arrow L direction.

As illustrated in Fig. 15, in the metal mold 10 in the present embodiment, a gate 258 is located on one side in the T direction from a most one side in the arrow L direction in the cavity 60. In other words, in the present embodiment, the gate 258 is located between a portion from the tapered portion 92 to a distal end portion 265 of the cavity 60.

Other configurations are the same as those of the first embodiment.

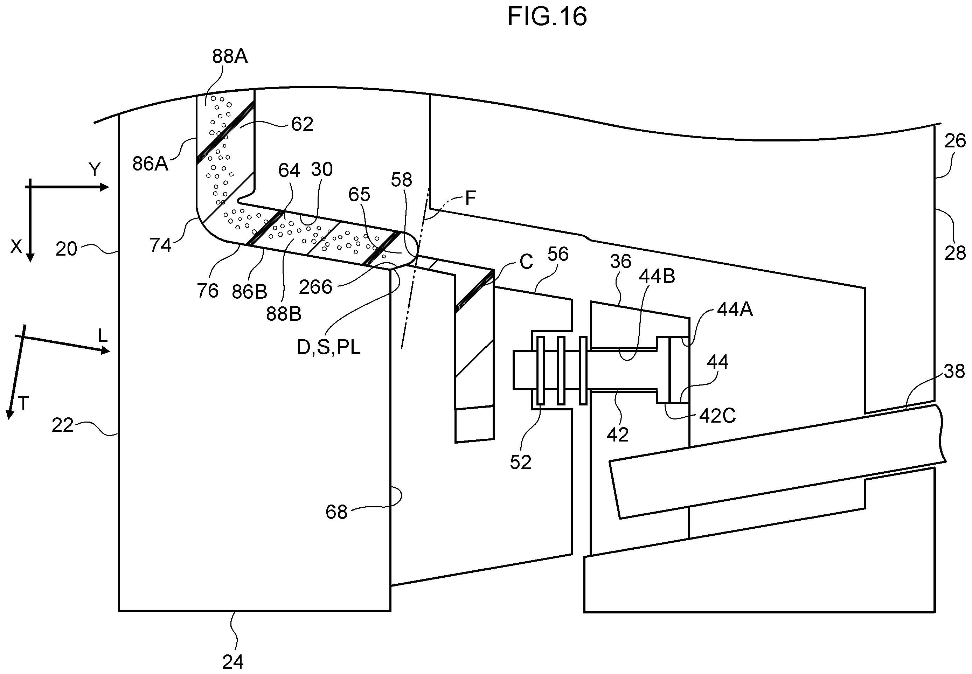

In the present embodiment, as illustrated in Fig. 16, the slide core 56 moves to one side in the X direction, whereby the cured resin material R is cut at a portion of the gate 258 to form the gate mark 80 of the resin molded article 70.

### (Operations and Effects)

Also in the present embodiment, as illustrated in Fig. 15, the contact between the slide core 56 and the fixed mold 20 is maintained in a state where the movable mold 26 performs a volume expansion operation. As a result, as in the first embodiment, it is possible to reduce the possibility that the design surface is deformed when the resin molded article 70 is formed, and the designability of the design surface in the formed resin molded article 70 is impaired.

Also in the present embodiment, as illustrated in Fig. 14, in the gate mark 80, the distal end portion 284 of the projecting portion 76 has the gate mark 80 formed on the second design surface 86B side in the thickness direction of the distal end portion 284 of the projecting portion 76, and the distal end portion 284 is formed on the inner side of the main body portion 72 than the demarcation line D defining the general portion 78 and the distal end portion 284. That is, since the gate mark 80, which is located on the opposite side of the second design surface 86B from the general portion 78 on the second design surface 86B, is likely to be confused with the demarcation line D, the gate mark 80 is inconspicuous from a person looking at a design surface. As a result, in the formed resin molded article 70, since the gate mark 80 is inconspicuous on the design surface, the possibility of impairing the designability of the design surface is reduced.

Other operations and effects obtained by the metal mold 10 in the first embodiment can be similarly obtained in the present embodiment.

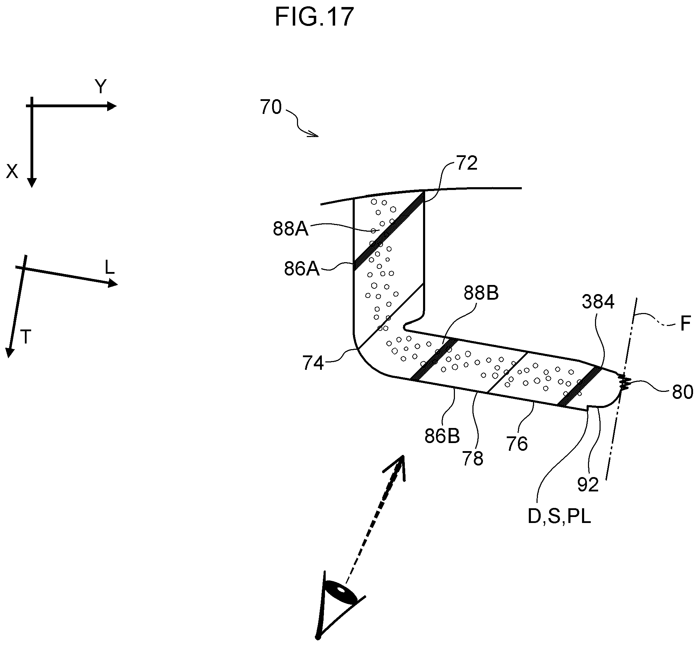

Subsequently, a fourth embodiment in the present disclosure will be described with reference to Figs. 17 to 19 as appropriate. Note that, among the configurations according to the present embodiment, configurations similar to those of the first embodiment are denoted by the same reference numerals, and a specific description thereof may be omitted.

### [Fourth Embodiment]

### (Resin Molded Article 70)

Fig. 17 is a view illustrating a resin molded article 70 in a fourth embodiment. In the present embodiment, as compared with the resin molded article 70 of the first embodiment, the gate mark 80 is formed on the other side in the T direction with respect to the vertex on one side in the arrow L direction within the range of the distal end portion 384 in the T direction at a distal end portion 384 of the projecting portion 76. In other words, in the present embodiment, the gate mark 80 is formed on the other side in the T direction with respect to a point (vertex of the distal end portion 384) that is parallel to the T direction which is a thickness direction of a projecting portion 376 and is in contact with a tangent F in contact with the distal end portion 384. In other words, in the resin molded article 70 in the present embodiment, the gate mark 80 is not formed on one side in the T direction with respect to the vertex on one side in the arrow L direction within the range of the distal end portion 384 in the T direction.

The shape of other portions is the same as that of the resin molded article 70 according to the first embodiment.

Subsequently, a metal mold 10 for manufacturing the resin molded article 70 according to the present embodiment will be described.

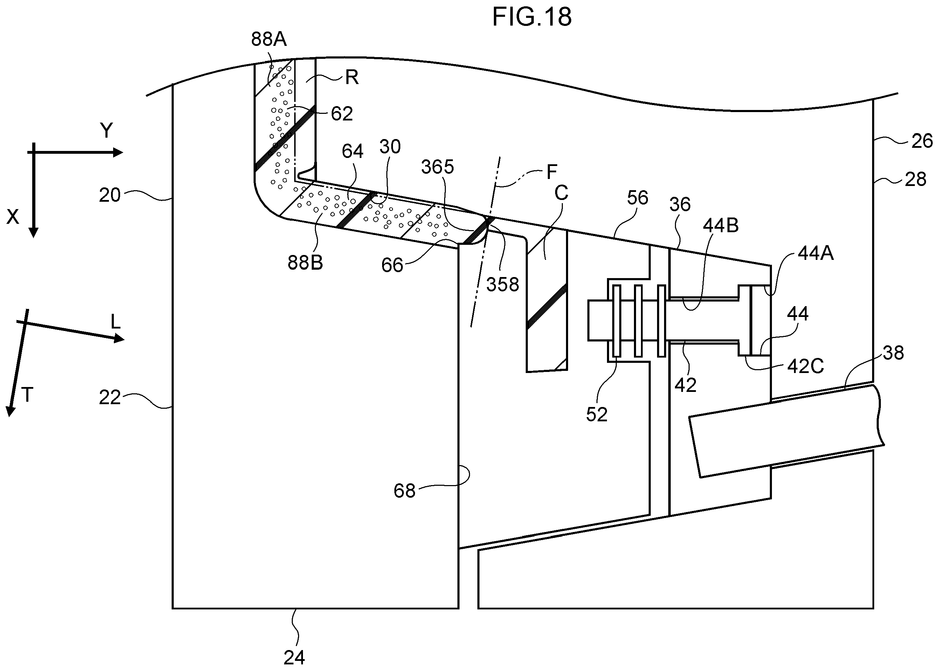

Fig. 18 is a view illustrating a metal mold 10 in the present embodiment. **In** the present embodiment, in the metal mold 10 in the present embodiment, a gate 358 is located on the other side in the T direction from a most one side in the arrow L direction in the cavity 60. **In** other words, in the present embodiment, the gate 358 is located between a distal end portion 365 of the cavity 60 and the protruding portion 30 of the movable mold 26.

Other configurations are the same as those of the first embodiment.

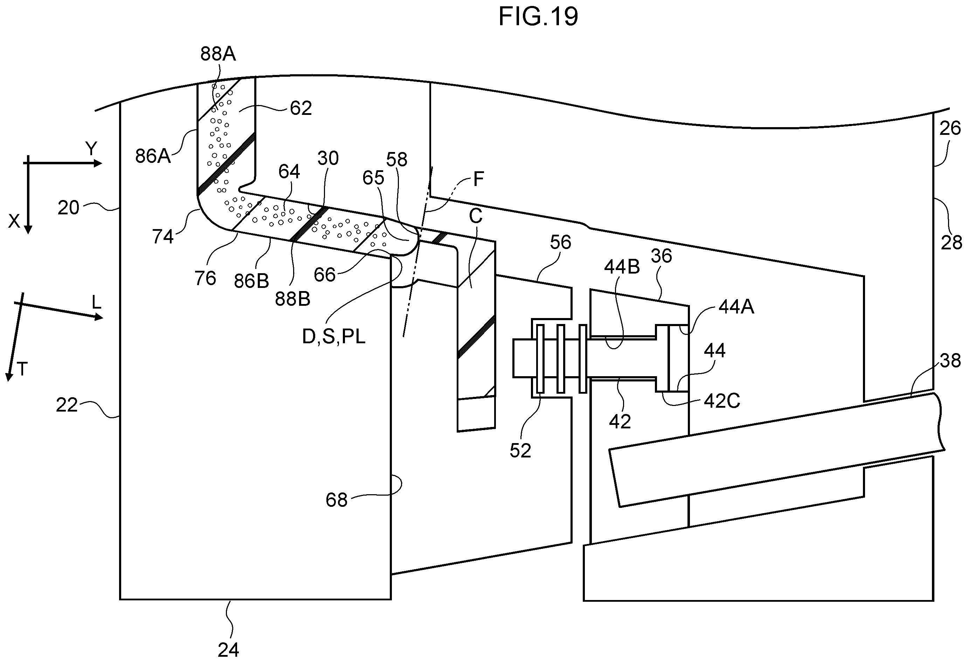

In the present embodiment, as illustrated in Fig. 19, the slide core 56 moves to one side in the X direction, whereby the cured resin material R is cut at a portion of the gate 358 to form the gate mark 80 of the resin molded article 70.

### (Operations and Effects)

Also in the present embodiment, as illustrated in Fig. 18, the contact between the slide core 56 and the fixed mold 20 is maintained in a state where the movable mold 26 performs a volume expansion operation. As a result, as in the first embodiment, it is possible to reduce the possibility that the design surface is deformed when the resin molded article 70 is formed, and the designability of the design surface in the formed resin molded article 70 is impaired.

Also in the present embodiment, as illustrated in Fig. 17, the gate mark 80 is formed on the side opposite from the second design surface 86B in the thickness direction of the projecting portion 76 with respect to the distal end in the projecting direction at the distal end portion 384 of the projecting portion 76. That is, since the gate mark 80 is formed at the portion on the side opposite from the second design surface 86B in the thickness direction of the projecting portion 76 with respect to the distal end in the projecting direction at the distal end portion 384 of the projecting portion 76, it is difficult for a person looking at a design surface to visually recognize the gate mark 80. As a result, in the resin molded article 70 in the present embodiment, since it is difficult to visually recognize the gate mark 80 on the design surface, the possibility of impairing the designability of the design surface is reduced.

Other operations and effects obtained by the metal mold 10 in the first embodiment can be similarly obtained in the present embodiment.

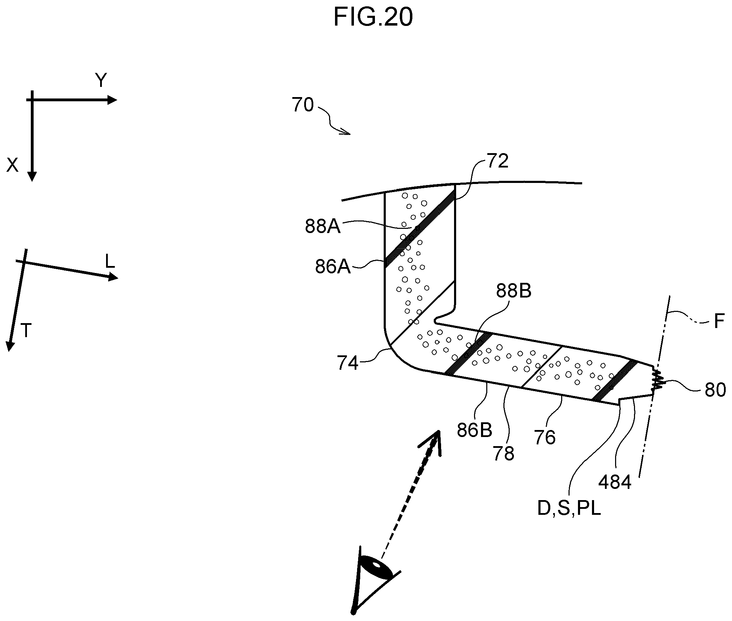

Subsequently, a fifth embodiment in the present disclosure will be described with reference to Figs. 20 to 22 as appropriate. Note that, among the configurations according to the present embodiment, configurations similar to those of the first embodiment are denoted by the same reference numerals, and a specific description thereof may be omitted.

### [Fifth Embodiment]

### (Resin Molded Article 70)

Fig. 20 is a view illustrating a resin molded article 70 in a fourth embodiment. **In** the present embodiment, as compared with the resin molded article 70 of the first embodiment, a distal end shape of a distal end portion 484 of the projecting portion 76 is not an arc shape but a linear shape. In other words, the gate mark 80 is formed to include a point (vertex of the distal end portion 484) that is parallel to the T direction which is a thickness direction of the projecting portion 76 and is in contact with a tangent F that is in contact with the distal end portion 484. In other words, the gate mark 80 is formed on one side in the T direction with respect to a vertex on one side in the arrow L direction and is formed on the other side in the T direction with respect to the vertex on one side in the arrow L direction within the range of the distal end portion 484 in the T direction.

The shape of other portions is the same as that of the resin molded article 70 according to the first embodiment.

Subsequently, a metal mold 10 for manufacturing the resin molded article 70 according to the present embodiment will be described.

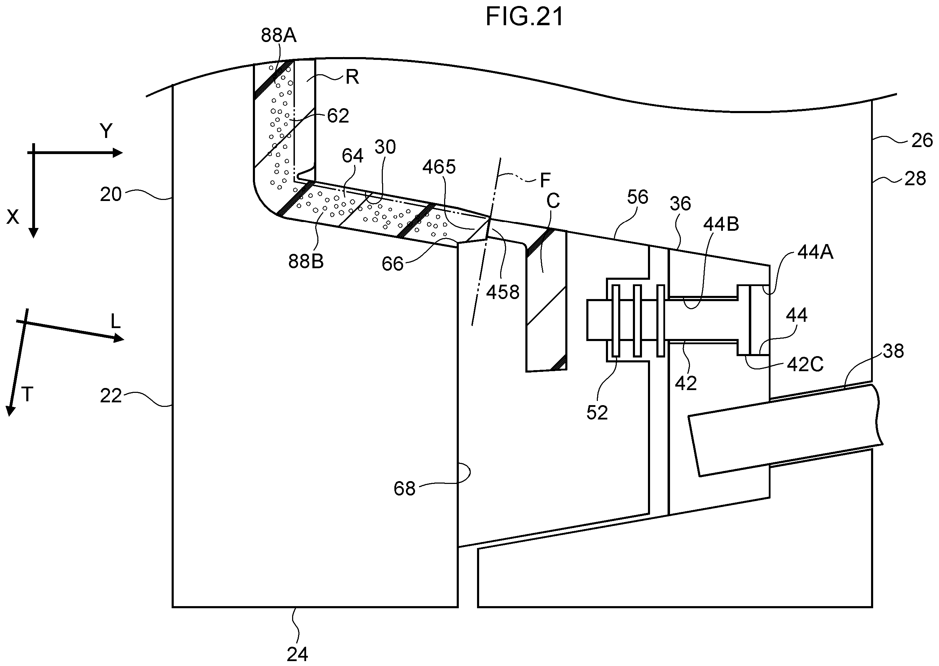

Fig. 21 is a view illustrating the metal mold 10 in the present embodiment. In the present embodiment, the step 66 is formed by the dividing surface 68 where the fixed mold 20 and the slide core 56 are in contact with each other.

In the present embodiment, as illustrated in Fig. 21, a most one side in the arrow L direction of the second cavity 64 in the cavity 60 is parallel to the X direction. In other words, in the present embodiment, the second cavity 64 is linear, and a gate 458 is located on a distal end portion 465 of the second cavity 64.

Other configurations are the same as those of the first embodiment.

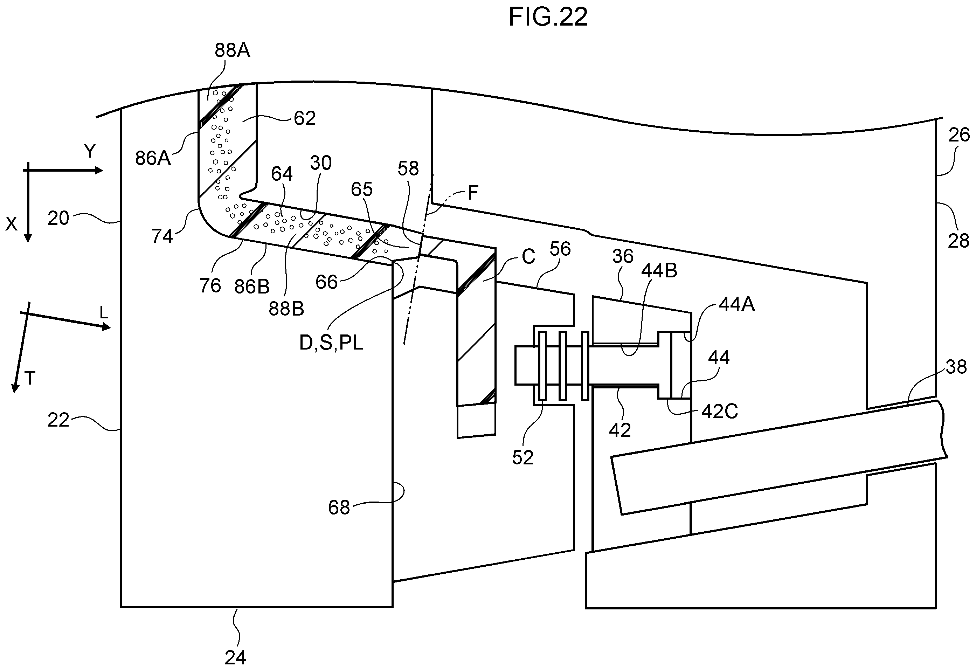

In the present embodiment, as illustrated in Fig. 22, the slide core 56 moves to one side in the X direction, whereby the cured resin material R is cut at a portion of the gate 458 to form the gate mark 80 of the resin molded article 70.

### (Operations and Effects)

Also in the present embodiment, as illustrated in Fig. 22, the contact between the slide core 56 and the fixed mold 20 is maintained in a state where the movable mold 26 performs a volume expansion operation. As a result, as in the first embodiment, it is possible to reduce the possibility that the design surface is deformed when the resin molded article 70 is formed, and the designability of the design surface in the formed resin molded article 70 is impaired.

In the present embodiment, as illustrated in Fig. 22, the slide core 56 moves to one side in the X direction, whereby the cured resin material R is cut at a portion of the gate 458 to form the gate mark 80 of the resin molded article 70.

Also in the present embodiment, as illustrated in Fig. 20, the gate mark 80 is formed on the side opposite from the second design surface 86B in the thickness direction of the projecting portion 76 with respect to the distal end in the projecting direction at the distal end portion 484 of the projecting portion 76. That is, since the gate mark 80 is formed at the portion on the side opposite from the second design surface 86B in the thickness direction of the projecting portion 76 with respect to the distal end in the projecting direction at the distal end portion 484 of the projecting portion 76, it is difficult for a person looking at a design surface to visually recognize the gate mark 80. As a result, in the resin molded article in the present embodiment, since it is difficult to visually recognize the gate mark 80 on the design surface, the possibility of impairing the designability of the design surface is reduced.

In other words, also in the present embodiment, as illustrated in Fig. 20, in the gate mark 80, the distal end portion 484 of the projecting portion 76 has the gate mark 80 formed on the second design surface 86B side in the thickness direction of the distal end portion 484 of the projecting portion 76, and the distal end portion 484 is formed on the inner side of the main body portion 72 than the demarcation line D defining the general portion 78 and the distal end portion 484. That is, since the gate mark 80, which is located on the opposite side of the second design surface 86B from the general portion 78 on the second design surface 86B, is likely to be confused with the demarcation line D, the gate mark 80 is inconspicuous from a person looking at a design surface. As a result, in the resin molded article in the present embodiment, since the gate mark 80 is inconspicuous on the design surface, the possibility of impairing the designability of the design surface is reduced.

Although the embodiments of the present disclosure have been described above with reference to the accompanying drawings, it is obvious that a person having ordinary knowledge in the technical field to which the present disclosure belongs can conceive various modifications or applications within the scope of the technical idea described in the claims, and it is naturally understood that these also belong to the technical scope of the present disclosure.

The disclosure of Japanese Patent Application No. 2022-174979 filed on October 31, 2022 is incorporated herein by reference in their entirety.

All documents, patent applications, and technical standards described in this specification are incorporated herein by reference to the same extent as if each document, patent application, and technical standard were specifically and individually indicated to be incorporated by reference.

## Claims

1. A metal mold comprising:
a fixed mold;
a movable mold that is movable in an opening/closing direction with respect to the fixed mold, that forms, between itself and the fixed mold, a first cavity extending in a direction intersecting the opening/closing direction, and a second cavity extending from an end of the first cavity in the intersecting direction to an opening direction with respect to the fixed mold, and that expands volumes of the first cavity and the second cavity when moved in the opening direction; and
a slide mold that is movable relatively with respect to the fixed mold, that forms an end portion of the second cavity in the opening direction, and that maintains its position relative to the fixed mold with respect to a volume expansion operation of the first cavity and the second cavity by the movable mold.

2. The metal mold according to claim 1, wherein the slide mold maintains its position relative to the fixed mold by being pressed against the fixed mold with respect to the volume expansion operation of the first cavity and the second cavity by the movable mold.

3. The metal mold according to claim 2, wherein the slide mold is pressed against the fixed mold by a biasing member provided at the movable mold.

4. The metal mold according to claim 1, wherein the slide mold has a gate for injecting a resin from the end portion of the second cavity in the opening direction into the second cavity, and is movable toward an outer side in the intersecting direction with respect to the fixed mold.

5. A resin molded article formed using the metal mold according to any one of claims 1 to 4.
